(19) Europäisches Patentamt
European Patent Office
Office européen des brevets

(11) **EP 4 273 769 A1**

(12) **EUROPEAN PATENT APPLICATION**

(43) Date of publication:
**08.11.2023 Bulletin 2023/45**

(21) Application number: **22382426.9**

(22) Date of filing: **03.05.2022**

(51) International Patent Classification (IPC):
**G06Q 10/04** (2023.01)    **G06Q 50/08** (2012.01)
**G06Q 50/26** (2012.01)    **G09B 25/00** (2006.01)
**G09B 29/00** (2006.01)

(52) Cooperative Patent Classification (CPC):
**G09B 25/00; G06Q 10/047; G06Q 50/08;**
**G06Q 50/26; G09B 29/00**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Fundación Tecnalia Research & Innovation**
  **48160 Derio - Bizkaia (ES)**
• **Universidad del Pais Vasco - Euskal Herriko**
  **Unibertsitatea (UPV/EHU)**
  **48940 Leioa (ES)**

(72) Inventors:
• **Delgado Enales, Iñigo**
  **Leioa (ES)**
• **Molina Costa, Patricia**
  **Derio - Bizkaia (ES)**
• **Del Ser Lorente, Javier**
  **Derio - Bizkaia (ES)**

(74) Representative: **Balder IP Law, S.L.**
  **Paseo de la Castellana 93**
  **5ª planta**
  **28046 Madrid (ES)**

(54) **SYSTEM AND METHOD FOR DETERMINING INSTALLATION OF URBAN INFRASTRUCTURES IN URBAN ENVIRONMENTS**

(57) Computer-implemented method for determining installation of urban infrastructures in urban environments, comprising generating a geo-referenced multi-edge graph model representing a portion of an urban area, wherein vertices represent street junctions and edges connecting vertices represent walkable streets within the urban area; assigning a weight to each edge, the weight being associated to parameters of the edge which are related to an accessibility degree of the edge, to environmental conditions in the edge, to a pre-existence of urban infrastructures in the edge. The method selects a departing and an arrival vertex within the graph model, determines by a multi-objective optimization model, a type, structural/functional features and location of the urban infrastructure in a walkable path defined between the departing and arrival vertex, wherein the type, the structural/functional features and the location of the particular urban infrastructure optimize at least two accessibility and/or environmental parameters of the walkable path for a user.

**Description**

**TECHNICAL FIELD**

The present invention refers to the field of design, planning and regeneration of urban environments or areas. More particularly, it refers to methods and systems that use multi-objective optimization algorithms that support decision making when it comes to the improvement of urban accessibility for people, especially older people, in urban areas.

**BACKGROUND OF THE INVENTION**

Since the beginning of the industrial revolution, the fraction of the population that lives in urban areas has grown steadily until today. In the words of the United Nations, in 2050 70% of world population is expected to live in cities.

The term age-friendly-cities refers to those cities aiming to be more adapted to the needs of the older people, specifically by supporting "active ageing by optimizing opportunities for health, participation and security to enhance the quality of life as people age". Since people loss mobility as they age, these age-friendly-cities are consequently more adapted to the needs of any people with limited mobility such as people with spinal injuries, people on wheelchairs or making use of any other mobility assistance device, etc. In an attempt to measure the age-friendliness level of a city, the World Health Organization (WHO) has defined 88 core age-friendly features, among which universal accessibility is arguably one of the most significant characteristics. This concept can be defined as the opportunity to access/reach community resources, services and recreational facilities. Thus, improving the universal accessibility for people in general, and in particular for older people and people with restricted mobility, leads to a better quality of life and contributes to the prosperity of society as a whole.

Traditionally, decisions related to the installation or modification of urban infrastructures in existing urban environments are mainly based on heuristics, statistical studies, audits or the expert knowledge of experienced urban planners, and are usually planned in 2 dimensions. These processes are often slow, manual, prone to error and, in some cases, uninformed with evidence. Artificial Intelligence, Big Data and digital twins are enabling new methods for optimizing and improving urban accessibility. However, the exploitation of these technologies for the aforementioned purpose is still in an embryonic stage.

Some existing solutions use simulation-based optimization for generating models that characterize and optimize urban pedestrian mobility. Although, simulation engines have today achieved unprecedented levels of precision and fidelity, they demand an overly high computational cost for supporting strategic decisions.

Artificial Intelligence is also coming into play as an enabler for informed decision making in urban regeneration. Data-based machine learning models, including deep convolutional neuronal networks, have been used to reduce the resources and time needed for analyzing deficiencies and possible improvements of urban environments. When the focus is placed on enhancing urban accessibility, several studies have resorted to AI-based solvers for addressing different optimization problems related to this objective. However, these AI-based solutions have been focused on solving road traffic problems in urban environments rather than being focused on improving the accessibility of urban environments for pedestrians.

Some other solutions have focused on finding alternative routes for walkers that are more accessible for mobility-constrained users (e.g., older people, wheelchair users), rather than on enhancing the accessibility of existing trajectories. In practice, people are not used to changing their mobility habits. Besides, major changes in routes can cause disorientation in people of advanced age, leading to a security risk for these citizens. Moreover, in some scenarios there might be no alternative routes that could comply with the accessibility requirements of the target population, making the discovery of accessible routes an unreachable goal, and discouraging older pedestrians from having an active life. Thus, these solutions for the improvement of urban accessibility involve the creation of new walking routes, leaving aside the upgrade or modification of the existing ones.

Then, great potential remains untapped in the use of new technologies to support Decision Support Systems (DSS) and related processes in public policies, including urban planning. Therefore, there is still a need in the art for systems and methods able to improve the accessibility degree of existing routes by determining potential active interventions in the urban elements that may significantly improve accessibility for users, especially for users with mobility limitations.

**DESCRIPTION OF THE INVENTION**

The solution herein disclosed overcomes the above-mentioned problems by combining a graph-based model and multi-objective optimization algorithms to determine the deployment of urban infrastructures, such as mechanical ramps, escalators, lifts, and barriers, among many others, in urban environments that improve urban accessibility for people, in particular, for people with mobility issues such as older people or people with spinal and/or musculoskeletal malformations or injuries.

As used herein, the expression "urban accessibility" refers to those physical and environmental conditions that make it possible for users to arrive, leave and use houses, shops, private and public places, etc., in urban environments. Designing urban environments with a high accessibility degree enable people, independently of their age or physical condition, to participate in the social and economic activities within the urban environment.

As used herein, the expressions "urban environment" and "urban area" may refer to environments or areas, respectively, with an increased density of human-created structures in comparison to the environments or areas surrounding it. These urban environments or areas may be cities, towns, conurbations or rural settlements such as villages, among others.

The expression "urban infrastructures" may generally refer to basic facilities, services, and installations needed for the functioning of a community or society, such as transportation and communications systems, water and power lines, and public institutions including schools, post offices, and prisons, among many others. As used herein, the expression "urban infrastructure" may more specifically refer to infrastructures deployable in urban environments that facilitate users to arrive, leave and use houses, shops, private and public places, etc., and thus, that are able to modify, preferably increase, the accessibility degree for the users of a particular urban area.

A first object of the invention is a computer-implemented method for determining installation of urban infrastructures in urban environments. The method comprises generating a geo-referenced multi-edge graph model representing a portion of a particular urban area. The geo-referenced multi-edge graph model comprises vertices representing street junctions within the urban area and edges that connect every pair of vertices and that represent corresponding walkable streets within the urban area.

The method further comprises assigning a weight, e.g., a numerical value, to each edge in the geo-referenced multi-edge graph model. The weight assigned to each edge is associated to at least one parameter of the edge itself. The at least one parameter is related to the urban accessibility degree of the edge, to the existing environmental conditions in the edge, to the pre-existence of urban infrastructures in the edge and any combination thereof. Then, at least one departing vertex and at least one arrival vertex within the geo-referenced multi-edge graph model are selected. Preferably, the selected departing and arrival vertices will correspond with the vertices whose coordinates in the geo-referenced multi-edge graph model are closer to the departing and arrival points of interest. For example, for the case of older people, the departing point may correspond to the exact location of a nursing home or senior center and the arrival point may be a park, pharmacy or an ambulatory. Thus, the selected departing and arrival vertices will be those whose coordinates are closer to the nursing home or senior center and to the park, pharmacy or ambulatory, respectively.

After that, the method, by using a multi-objective optimization model, determines: (i) a type of urban infrastructure; (ii) the structural/functional features of the urban infrastructure; and (iii) a location of the urban infrastructure in the walkable path defined between the at least one departing vertex and the at least one arrival vertex previously selected. The type, structural/functional features and location of the particular urban infrastructure will be selected by the multi-objective optimization model to optimize, in particular minimize or maximize, at least two accessibility and/or environmental parameters of the walkable path for a user. Preferably, the user is a user with reduced mobility.

Depending on the routing algorithm used to determine the routes in the geo-referenced multi-edge graph model between the departing and arrival vertices, the way in which the weight is assigned to each edge may vary. For example, the weight assigned to a particular edge based on the accessibility degree of said edge may be higher or lower depending on the routing algorithm selected. Preferably, the weight assigned to each edge may be lower the higher is the accessibility degree of the edge, the more favorable the existing environmental conditions in the edge for the user are and the more pre-existing urban infrastructure there are in the edge.

As used herein, the term "accessibility parameter of a walkable path" may refer to parameters related to the urban accessibility of the particular walkable path. In some embodiments, the at least one accessibility parameter is selected from a group comprising: time taken for a user to walk along the walkable path, average daily thermal comfort of the walkable path, slope of the walkable path, presence of stairs in the walkable path, width of pavement in the walkable path, distance from the walkable path to a public transport infrastructure or stop or point of interest or public facility and presence of urban infrastructures in the edge.

As used herein, the term "environmental parameter of a walkable path" may refer to parameters related to the environment surrounding the particular walkable path, including climatic parameters. For example, the at least one environmental parameter may be the average thermal comfort, the average noise level, average pollution level, average wind speed and direction and average relative humidity in the walkable path, and any combination thereof.

Thus, the multi-objective optimization model is to be feed with the at least one accessibility and/or environmental parameter to be optimized and depending on selected parameter and depending on if said parameter or parameters are to be maximized or minimized, the output of the multi-objective optimization model may vary. For example, if the parameter selected is the time taken for a user to walk along the walkable path and it is to be minimized, the output of the multi-objective optimization model may be different (different type of accessibility infrastructure and/or different structural/functional features of the urban infrastructure and/or different location of the urban infrastructure in the walkable path) than if the parameter is the average thermal comfort that is to be maximized, for the same departing and arrival vertex in the geo-referenced multi-edge graph model.

In some embodiments, the selection of the type of accessibility infrastructure comprises selecting said type from a group comprising ramps, urban escalators, lifts, sound, sun or wind barriers and any combination thereof.

In some embodiments, the selection of the structural/functional features of the particular urban infrastructure comprises:

selecting the structural/functional features of the ramps from a group comprising: slope of the ramp, relative length of the ramp with respect to the total length of the edge in which it is to be installed and any combination thereof;

selecting the structural/functional features of the urban escalators from a group comprising: slope of the urban escalator, relative length of the urban escalator with respect to the total length of the edge in which it is to be installed, nominal speed at which the urban escalator is to operate and any combination thereof;

selecting the structural/functional features of the lifts from a group comprising: height of the lift, nominal speed at which the lift is to operate and any combination thereof; and

selecting the structural/functional features of the sound, sun or wind barriers from a group comprising: height of the barriers, relative length of the barriers with respect to the total length of the edge in which it is to be installed and any combination thereof.

In some embodiments, generating the geo-referenced multi-edge graph model comprises defining the geo-referenced multi-edge graph model as $G = \{V, E, [f_1, ..., f_M]\}$, wherein 'V' represents a set of the $|V|=V$ vertices of the geo-referenced multi-edge graph model corresponding to the street junctions within the portion of urban area; 'E' is a set of the edges connecting every pair of vertices 'V', and '$f_m$': $V \times V \to R+$ is a function assigning the weight to each edge, wherein each of such functions $[fm(\cdot)]^M_{m=1}$ accounts for one particular accessibility or environmental parameter of the edge.

In some embodiments, the method comprises obtaining accessibility parameters of the walkable streets from Open data portals. These Open data portals are often made available by city councils.

In some embodiments, the method comprises associating geographical coordinates to the vertices, said geographical coordinates being obtained from topographical Geographic Information System (GIS) databases.

In some embodiments, the multi-objective optimization model provides a type-dependent vector with the structural/functional features of the selected accessibility infrastructure.

In some embodiments, the step of determining the type of accessibility infrastructure, the structural/functional features of the accessibility infrastructure and the location of the accessibility infrastructure in the walkable path comprises:

determining a plurality of walkable paths between each pair of departing vertices and arrival vertices of a plurality of departing vertices and a plurality of arrival vertices,

assigning to each walkable path of the plurality of walkable paths a different combination of types of accessibility infrastructures with different structural/functional features and located in different points of the corresponding walkable paths;

calculating the time path for a user for each walkable path;

selecting the walkable path that minimizes the time path for the user; and

providing as an output the type of accessibility infrastructure, the structural/functional features of the accessibility infrastructure and the location of the accessibility infrastructure in the selected walkable path.

In some embodiments, the multi-objective optimization model also determines the type of urban infrastructure, structural/functional features of the urban infrastructure and a location of the urban infrastructure in the walkable path that minimize the costs of the urban intervention. In such embodiments, the multi-objective optimization model in addition to the at least one accessibility and/or environmental parameter of the walkable path that is to be minimize or maximize will also define as one of its objectives the minimization of costs associated to the urban intervention that requires installation of determined urban infrastructure in the determined location.

In some embodiments, the multi-objective optimization model is a multi-objective evolutionary optimization model. By being evolutionary the model does not need to be derivable. Besides, since evolutionary optimization models learn from the experience, they do not require a gradient to obtain an optimized output.

In some embodiments, the method uses a Dijkstra algorithm to find the shortest path between every pair of origin and destination nodes. In this particular embodiment, the Dijkstra algorithm will choose those edges with lower weight.

A second object of the invention is a computer program product comprising computer program instructions/code that when executed by a computer, cause the computer to carry out the method previously described.

A third object of the invention is a data processing system comprising means for carrying out the method previously described. The means for carrying the method may be a processor, central processing unit (CPU), microprocessor, or any hardware device suitable for performing the functionalities herein described.

The solution herein disclosed presents resorts to a graph model of the problem, which although may lead to less accurate results, it requires lower computational effort and provides higher flexibility and scalability than other known simulation-based alternatives. Besides it is able to provide determine those urban interventions that in addition to optimize, in particular minimize or maximize, the selected accessibility and/or environmental parameters is able to minimize the costs associated to the required urban intervention. In particular, by using geo-referenced multi-edge graph models for modeling the urban are under study, more parameters to be considered can be added to the edges in an easy and straightforward way. This allows analyzing additional parameters of the urban area with the model already generated without having to start from the scratch. Then, the solution herein disclosed allows spanning further parameters to be considered in the decision-making, the optimization criteria and applications related to the improvement of urban accessibility in an easy and flexible manner.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a flow diagram of a method for determining installation of urban infrastructures in urban environments, according to an embodiment of the invention.
Figure 2 shows schematic diagram of the method for determining installation of urban infrastructures in urban environments, according to another embodiment of the invention.
Fig. 3 shows a particular example of a 3D representation of the urban topography and the 2D graph corresponding to a particular urban area in the north of Spain.
Figure 4 shows the geo-referenced multi-edge graph generated for the urban are represented in Figure 3.
Figure 5 shows a histogram of the street slopes of the geo-referenced multi-edge graph of Figure 4.
Figure 6 shows an approximation of the Pareto front between average path time and cost of the urban infrastructure to be deployed for accessibility improvement (color denotes the value of K).
Figures 7A-E show three-dimensional graphs representing the shortest paths from each origin node to each destination node (black bold lines), together with the edges in which assets are deployed (in red). Each caption denotes the objective values and the number of installed urban elements.

## DESCRIPTION OF A WAY OF CARRYING OUT THE INVENTION

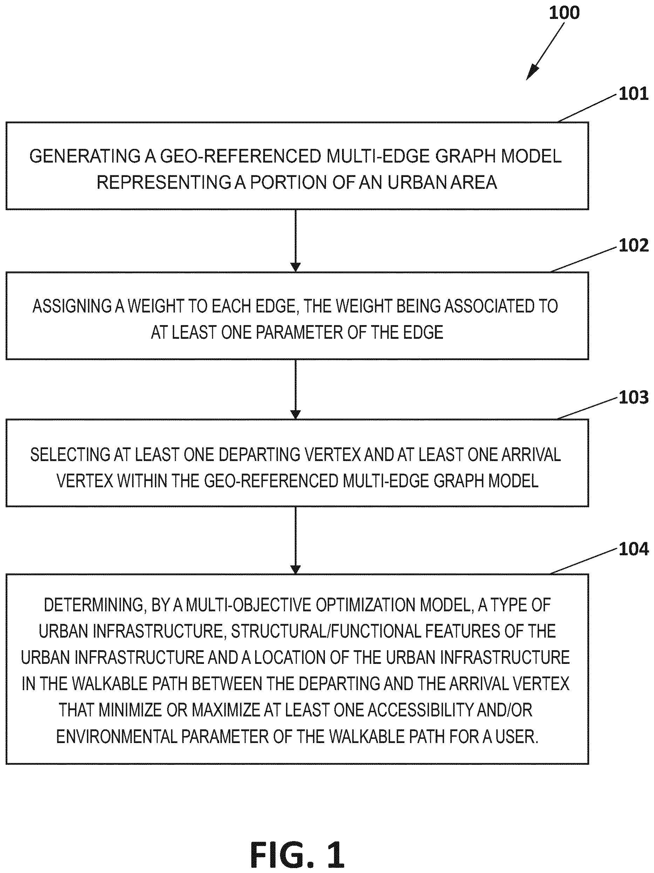

Figure 1 shows a flow diagram of a method 100 for determining installation of urban infrastructures in urban environments, according to an embodiment of the invention. The method comprises generating 101 a geo-referenced multi-edge graph model representing a portion of a particular urban area. The geo-referenced multi-edge graph model comprises vertices representing street junctions within the urban area and edges that connect every pair of vertices and that represent corresponding walkable streets within the urban area.

The method further comprises assigning 102 a weight, e.g., a numerical value, to each edge in the geo-referenced multi-edge graph model. The weight assigned to each edge is associated to at least one parameter of the edge itself. The at least one parameter is related to the urban accessibility degree of the edge, to the existing environmental conditions in the edge, to the pre-existence of urban infrastructures in the edge and any combination thereof. Then, at least one departing vertex and at least one arrival vertex within the geo-referenced multi-edge graph model are selected 103.

After that, the method, by means of a multi-objective optimization model, determines 104: (i) a type of urban infrastructure; (ii) the structural/functional features of the urban infrastructure; and (iii) a location of the urban infrastructure in the walkable path defined between the at least one departing vertex and the at least one arrival vertex previously selected. The type, structural/functional features and location of the particular urban infrastructure will be selected by the multi-objective optimization model to optimize, e.g., minimize or maximize, at least two accessibility and/or environmental parameters of the walkable path for a user. Preferably, the user is a user with reduced mobility such as an elderly person. While in some embodiments, the accessibility and/or environmental parameters could be all maximized or minimized, in some other embodiments, some of the accessibility and/or environmental parameters may be maximized while some other accessibility and/or environmental parameters may be minimized in other to determine the type, the structural/functional features and the location of the particular urban infrastructure to be installed in a particular edge.

Preferably, the economic cost of installing the infrastructure will be also considered by the multi-objective optimization model as one of its objectives, so said cost is minimized. In this way, the decision about installing a particular urban infrastructure in a city in order to, for example, minimize the time taken for a user to walk a particular path between a departing and a destination point will also consider the estimated costs of installing the infrastructure, choosing that solution that optimizes both parameters, the time taken for a user to walk a particular path and the cost associated to the installation of such infrastructure (minimizing both parameters).

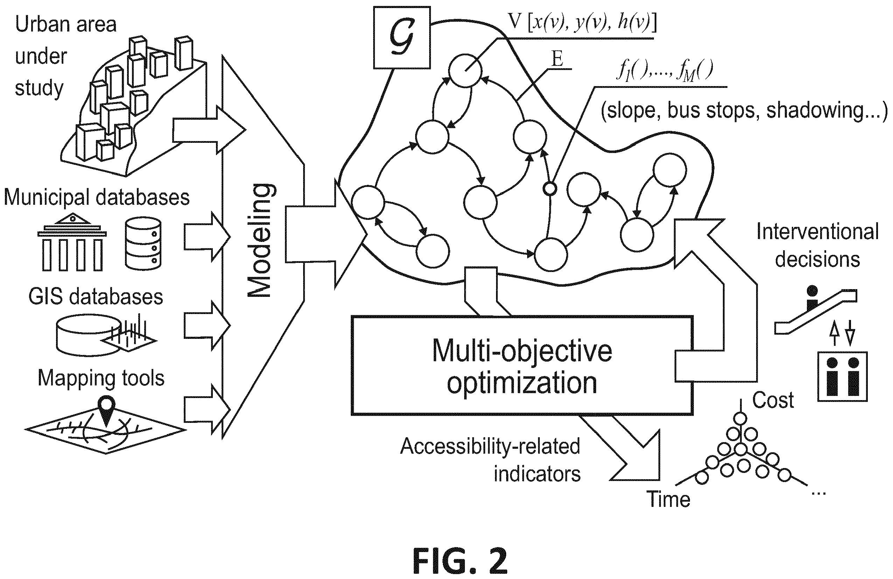

Figure 2 shows schematic diagram of the method for determining installation of urban infrastructures in urban environments, according to another embodiment of the invention. This embodiment of the method departs from the construction of a geo-referenced multi-edge graph $G = \{V, E, [f_1, ..., f_M]\}$, where 'V' represents the set of $|V|=V$ nodes or vertices of the graph (street junctions of the urban area under study); 'E' is the set of edges connecting every pair of vertices (street segments), and '$f_m$': $V \times V \rightarrow R+$ is a function assigning a non-negative weight to each edge. Each of such functions $[fm(\cdot)]^M_{m=1}$ accounts for an aspect of the urban environment that affect the accessibility of older people. That is to say, each of such functions is associated to at least one parameter which is related to the urban accessibility of the corresponding edge, to the existing environmental conditions in the edge, to the pre-existence of urban infrastructures in the edge and any combination thereof. Examples of said parameters are the time taken to walk and traverse the edge at hand, the average daily thermal comfort of the street segment, the proximity to public transportation, or the width of pavements, to cite a few. It is not assumed any symmetry in the weights of edges connecting every pair of nodes, namely, '$f_m(v,v')$' is not necessarily equal to '$f_m(v',v)$' and '$v \neq v''$. Geo-referencing extends the definition of graph 'G' with the coordinates $(x(v), y(v))$ and elevation $h(v)$ $\forall v \in V$.

In the aforementioned graph 'G', edges 'E' represent streets or walkable paths of the urban area under study, while nodes 'V' correspond to junctions where two or more streets collide. The annotation of the geographical coordinates of nodes over the urban area under study can be provided by topographical GIS databases, whereas other variables affecting the mobility and accessibility of older pedestrians can be fed from Open Data portals, which are often made available by city councils of medium-to-large size (municipal databases). Furthermore, the assumption of several, differently weighted edges between every pair of nodes permits to measure different objectives related to accessibility.

An example of the multi-criteria decision making support eased by the method object of the invention is the time taken by an older person (or a person with reduced mobility) to traverse a certain street segment '$(v,v')$', which can be thought to be highly dependent on 1) its slope '$\theta(v,v')$' which can be calculated as:

$$\theta\left(v, v^{'}\right) = \arctan\left(\frac{h(v^{'})-h(v)}{\sqrt{(x(v)-x(v'))^2+(y(v)-y(v'))^2}}\right) \qquad (1)$$

were $\theta(v,v') \in R[-90°, 90°]$; and 2) the length of the segment, given by:

$$l(v, v') = \sqrt{(x(v) - x(v'))^2 + (y(v) - y(v'))^2 + (h(v) - h(v'))^2}$$

Based on these definitions, a widely model to compute the walking speed as a function of the slope is the so-called Tobler's hiking function, which establishes:

$$S(v,v') = 6 \exp(-3.5 \cdot |\tan \theta(v,v') + 0.05|) \text{ [km/h]} \qquad (2)$$

from where the walking time of the edge $(v,v')$ yields as:

$$T(v,v') = l(v, v')/S(v,v') \text{ [h]} \qquad (3)$$

where it has been assumed that '$l(v,v')$' is measured in kilometers. Since the method is focused in improving the accessibility degree of the walkable path for people with mobility limitations, e.g., older people, the above general model can be modified to take into account their inability to traverse a street segment featuring a slope higher than a maximum '$\theta_{max}$'. Therefore, the speed provided by this modified hiking function '$S_0(v,v')$' is defined as:

$$S_\diamond(v, v') = S(v, v') \cdot \begin{cases} \beta_\diamond & \theta(v, v') \leq \theta_{max}, \\ 0.01 \cdot \beta_\diamond & \theta(v, v') > \theta_{max}, \end{cases}$$

$$(4)$$

where 'S(v,v')' is given in expression (2), and '$\beta_0 \in R(0, 1]$' is a multiplicative factor that introduces a penalty due to the age of the pedestrian with reference to the nominal maximum speed of 'S(v,v')' (i.e., 6 km/h at $\theta(v,v') = 2.86°$). Therefore, the total time taken to go from an origin node '$v_o$' to a destination node '$v_d$' through graph 'G' is given by:

$$T(v_0, v_d) = \sum_{(v,v')\in E_{0,d}} l(v, v') \Big/ S_0(v, v')$$

$$(5)$$

where '$E_{o,d} \subseteq E$' is the ordered group of nodes that compose the minimum-cost path from origin node '$v_o$' to destination node '$v_d$'.

Thus, an optimization problem formulated based on the above definitions is to discover which urban interventions, understood as the installation of urban elements aimed to improve physical accessibility, including ramps, escalators, lifts, barriers or others, should be done for the average path time between a selected subset '$V_o$' of origin nodes and a subset of destinations nodes '$V_d$' to be minimized. The decision involves not only how many interventions should be done '(K)', but also which elements to deploy, their characteristics (e.g., length of a ramp), and in which edge over the urban area at hand. Each intervention can be denoted as a triplet '$(e_k, t_k, c_k)$', where '$e_k \in E$' indicates the edge where the intervention is done; '$t_k \in \{R, E, L, B\}$' (Ramp, Escalator, Lift, Barrier) establishes its type; and '$c_k$' is a type-dependent vector of features/functionalities of the installed infrastructure. Then, the impact of the installation of any of these urban infrastructures is modeled on a given edge of the graph by modifying again the Tobler's hiking function as:

$$S_\diamond^{acc}(v, v') = \begin{cases} S_\diamond(v, v') \text{ (Expr. (4)) if } e_k \neq (v, v'), \text{ else:} \\ S_R \text{ if } t_k = R, \theta(v, v') \in (\theta_{max}, \theta_{max}^R] \\ S_E \text{ if } t_k = E, \theta(v, v') \in (\theta_{max}^R, \theta_{max}^E] \end{cases}$$

$$(6)$$

where '$\theta_{max} < \theta_{max}^R < \theta_{max}^E < 90°$' denote the maximum slopes at which ramps and escalators can be installed; and '$S_R$' and '$S_E$' stands for the nominal speed at which a ramp and escalator, respectively, operate. Then, the average path time can be computed as:

$$T_{avg}(V_0, V_d = \frac{1}{|V_0||V_d|} \sum_{v_0 \in V_0} \sum_{v_d \in V_d} \sum_{(v,v')\in E_{0,d}} T^{acc}(v, v')$$

$$(7)$$

where:

$$T^{acc}(v, v') = \begin{cases} \frac{\ell(v,v')}{S_\diamond(v,v')} \text{ if } \nexists e_k = (v, v'), \text{ else:} \\ \frac{\gamma_k \ell(v,v')}{S_\diamond^{acc}(v,v')} + \frac{(1-\gamma_k)\ell(v,v')}{S_\diamond(v,v')} \text{ if } t_k \in \{R, E\}, \\ \frac{S_L}{\Delta_h(v,v')} + \frac{S_\diamond(v,v')}{\Delta_{xy}(v,v')} \text{ if } t_k = L, \end{cases}$$

$$(8)$$

where '$\Delta_h(v,v') = |h(v) - h(v')|$' (elevation difference); $\sqrt{(x(v) - x(v'))^2 + (y(v) - y(v'))^2}$' (horizontal distance); and $\gamma_k \in R(0, 1]$ denotes the relative length of the selected urban infrastructure with respect to the total length of the edge. Without loss of generality, it has been assumed that the vector of features '$c_k$' of the selected urban infrastructure reduces to its relative length.

A second objective that can be added to the multi-objective optimization model used by the method object of the present invention is the total cost of the installation of the urban infrastructures for accessibility. A straightforward albeit illustrative simplification is to assume that the cost '$C(e_k, t_k, \gamma_k)$' incurred by the installation of the urban infrastructure comprises:

$$C(e_k, t_k, \gamma_k) = C_{fix}(t_k) + C_{var}(t_k, e_k, \gamma_k) \qquad (8)$$

namely, a fixed term '$C_{fix}(t_k)$', which only depends on its type (e.g., engine, workforce, supporting materials); and a variable term '$C_{var}(t_k, e_k, \gamma_k)$' assumed to increase linearly with the effective length of the installation (namely, '$\gamma_k \cdot l(v,v')$' if '$(v,v')' = e_k$'). Other formulas for determining the costs for the installation of the urban infrastructures may be also used. Minimizing the total costs of the urban intervention can be tackled jointly with the minimization of the average path time given in Expression (7), yielding a problem with two objectives formulated as:

$$\min_{K, \{(e_k, t_k, \gamma_k)\}_{k=1}^{K}} \left[ T_{avg}(\mathcal{V}_o, \mathcal{V}_d), \sum_{k=1}^{K} C(e_k, t_k, \gamma_k) \right], \qquad (10)$$

$$\text{subject to: } \gamma_k \ell(v, v') < \ell_{max}, \forall k : t_k \neq \text{lift}, (v, v') = e_k,$$

for which the goal is to find solutions close to the Pareto trade-off between the accessibility improvement enabled by the urban infrastructures to be installed (given by the first objective) and the investment required to implement them in practice (second objective). Such objectives are conflicting with each other: the deployment of ramps, escalators, lifts or barriers, among others urban infrastructures, will reduce the walking time and potentially enable new paths that otherwise could not be traversed by older pedestrians. However, the more infrastructure is to be deployed, the higher the costs will be. The goal of the optimization problem is, hence, to find diverse options for the deployment (as per '$K$' and '$\{(e_k, t_k, \gamma_k)\}_{k=1}^{K}$') that differently, yet near optimally in the sense of Pareto, balance their objectives. A further technical constraint may be set to limit the length of the ramps and escalators below '$l_{max}$' meters. To do so, a multi-objective algorithm, preferably a multi-objective evolutionary algorithm, is used which is able to deal with optimization problems comprising multiple objectives defined over mixed continuous $(\{\lambda_k\}_{k=1}^{K})$ and discrete (K, $\{t_k, e_k\}_{k=1}^{K}$) search spaces. The solution encoding (genotype) is designed in close resemblance with the phenotype imposed by the problem:

$$[(e_1, t_1, \gamma_1), (e_2, t_2, \gamma_2) . . . , (e_{k_{max}}, t_{k_{max}}, \gamma_{k_{max}})] \qquad (11)$$

namely, a structure divided in '$K_{max}$' triplets, where an additional type in the alphabet of '$t_k$' (i.e., '$t_k \in \{R, E, L, \emptyset\}$') is inserted to allow for deployments involving the installation of '$K < K_{max}$' urban infrastructures. Departing from one solution encoded as above, the times needed to traverse each of the edges of the graph are updated accordingly, and the shortest path between every pair of origin and destination nodes in '$V_o$' and '$V_d$' is computed via a Dijkstra algorithm. Computing the average path time and the cost associated with the solution at hand permits to characterize its dominance in the space of objectives, whereas the specific multi-objective evolutionary approach in use establishes the search operators applied to perform the search for Pareto-optimal solutions efficiently.

In some other examples, other objectives and sources of urban information could be used to feed the method, spanning further optimization criteria and applications related to the improvement of urban accessibility. New edge weights could be added between every pair of nodes in '$G$' to indicate, for instance, the proximity to bus or taxi stops, parking spaces for people with reduced mobility, green zones or locations of cultural interest (e.g., museums). If pollution and/or acoustic sensors are available on site, information about the intensity of road traffic could be used measure the intensity of noise or the level of pollution in a particular edge or subarea containing a group of edges. Similarly, the exact location of waste containers, the presence of bike lanes or irrigation sensors might be also factors affecting the path of an older citizen, which can be also georeferenced, mapped as additional weights over the graph, and considered as new objectives and/or constraints.

While the embodiment of the method for determining installation of urban infrastructure in an urban are of Figure 2 has been described using a multi-objective evolutionary algorithm for which two objectives have been pre-defined, a first object to minimize the average path time for people with reduced mobility and a second object to minimize the cost associated to the installation of the urban infrastructures, other objectives associated to different parameters related to the accessibility of the edges, to the environmental conditions in the edges, to a pre-existence of urban infrastructures in the edges, and any combination thereof, and in a different number could be pre-defined for other particular implementations of the method object of the invention.

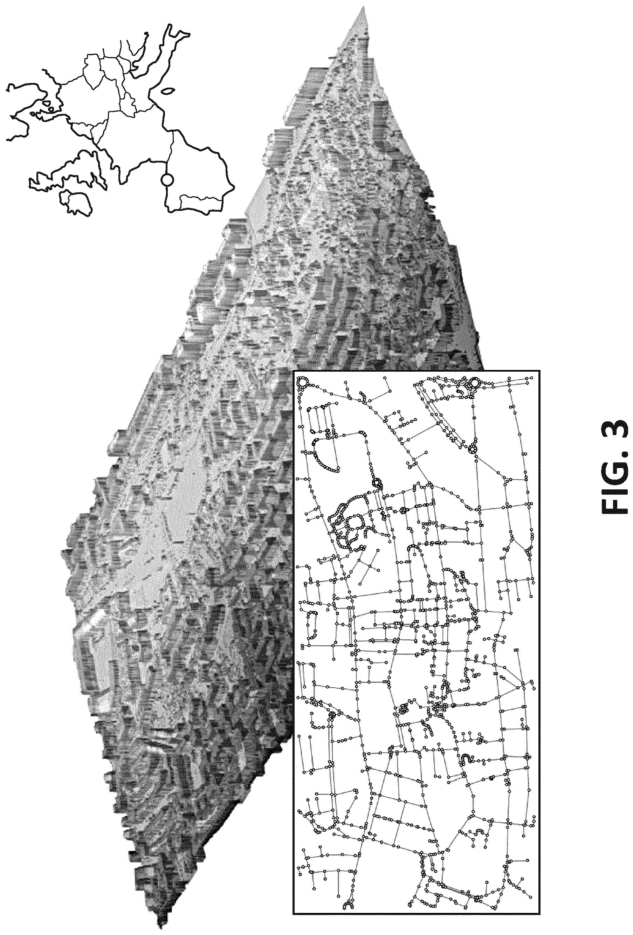

Fig. 3 shows a 3D representation of the urban topography (using LiDAR data) and the graph extracted via OSMnx/Open Street Maps corresponding to an urban area in the north of Spain, in particular the Entrehuertas neighborhood of Santander. This neighborhood is characterized by large slopes, laying a suitable scenario for the cost-efficient deployment of urban accessibility infrastructure. The following latitude and longitude bounds of the area under study to [43.25888°, 43.25230°] and [-2.90910°, -2.92157°], respectively, have been established.

Elevation data were retrieved from the National Geographic Institute (IGN) of the Spanish Government. Specifically, a Digital Terrain Model (DTM) of resolution equal to five meters was collected, creating a highly accurate 3D model of the terrain. On the other hand, the graph of the area is captured by the OSMnx Python library, which interfaces to the well-known Open Street Maps mapping service. To increase further the spatial resolution of the graph, the number of nodes has been increased by adding 5 equally spaced nodes on every edge (v, v'). Elevation data for every node was mapped from the aforementioned DTM models based on the proximity of its $(x(v), y(v))$ coordinates to the points of the DTM grid.

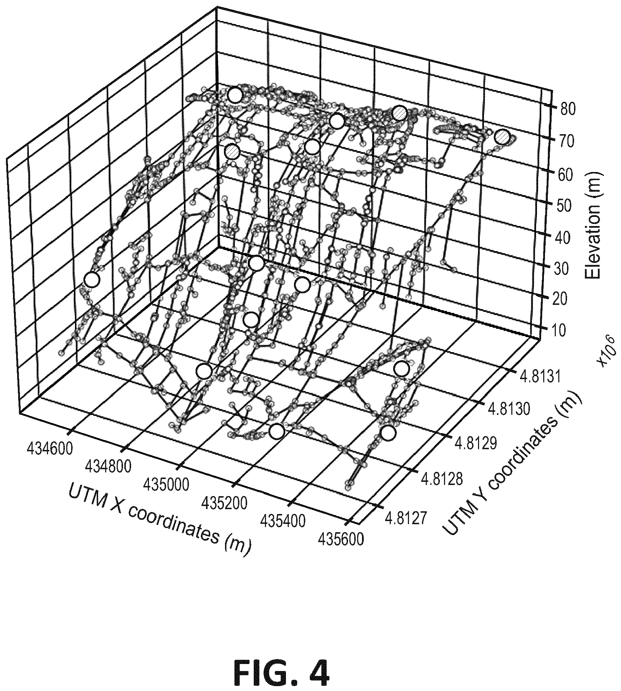

Figure 4 shows the geo-referenced multi-edge graph generated for the urban area represented in Figure 3. The graph includes annotated elevation data for every node (extrapolated nodes not depicted for the sake of visual clarity). In said graph all the vertices representing street junctions within the urban area and edges that connect every pair of vertices and that represent corresponding walkable streets within the urban area are shown.

Once the graph has been constructed, $|V_o| = 11$ origin nodes and $|V_d| = 3$ destination nodes are selected for the routes over which the average path time will be computed as per in expression (7). Destination nodes are carefully chosen to be close to points of interest for older citizens, whereas origins are scattered uniformly at random over the nodes of the scenario shown in figure 3. If available, municipal citizen databases could be analyzed to tailor the selection of origin nodes, e.g., by selecting those located in areas with a high density of aged inhabitants. The chosen origin (empty circles) and destination (lined circles) nodes are highlighted in Figure 4.

Table I. Parameters and values set for the use case.

| Parameter | Value | Parameter | Value |
|---|---|---|---|
| Imax | 100 m | $\theta^R_{max}$ | 12° |
| $S_R$ | 0.4 m/s | $\theta^S_{max}$ | 20° |
| $S_E$ | 0.5 m/s | $\beta_0$ | Max. speed equal to 1,1 m/s at slope -2° |
| $S_L$ | 1m/s | $C_{fix}(t_k)$ | 25k€ (ramp), 40k€ (escalator), 100K€ (lift) |
| $\theta_{max}$ | 8° | $C_{var}(t_k)$ | 6,8k€ (ramp), 7,5k€ (escalator), 10k€ (lift) |

Table I summarizes the values set for the parameters driving the walking speed model, together with those from which the costs of every installed infrastructure can be computed. By way of example, the multi-objective optimization model may be a Non-dominated Sorting Genetic Algorithm (NSGA-II) meta-heuristic solver.

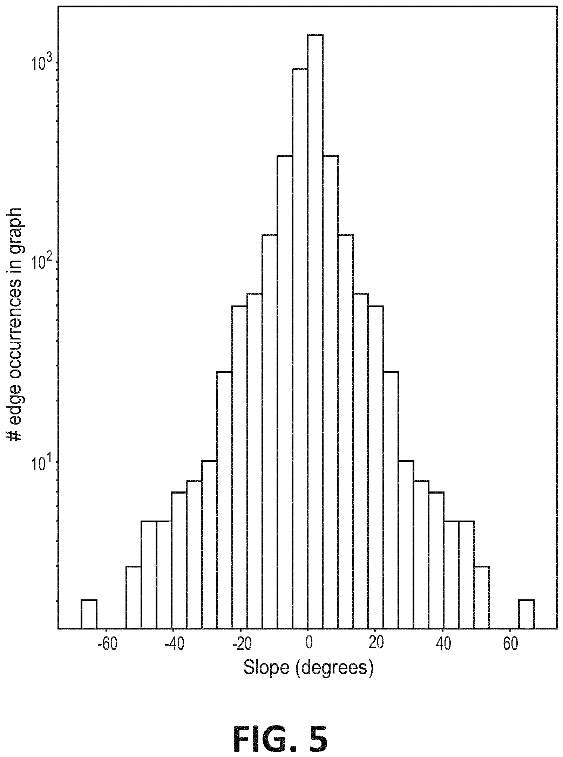

The integer part of the encoded solution (representing the type of asset '$t_k$' and edge '$e_k$' in which it is to be installed) is evolved separately from the real-valued part of the genotype (corr., the relative length '$\gamma_k$'). In both cases adapted version of the Simulated Binary Crossover (SBX) with probability 0.7 and distribution index equal to 20 are used. Integer random mutation and polynomial mutation are respectively applied to every part of the solution with an equal probability 0.1. The population size is equal to 30, and the search is stopped when reaching 104 evaluated solutions. A maximum number of '$K_{max} = 20$' assets were considered. Figure 5 shows a histogram of the street slopes (edge slopes) of the geo-referenced multi-edge graph shown in Figure 4.

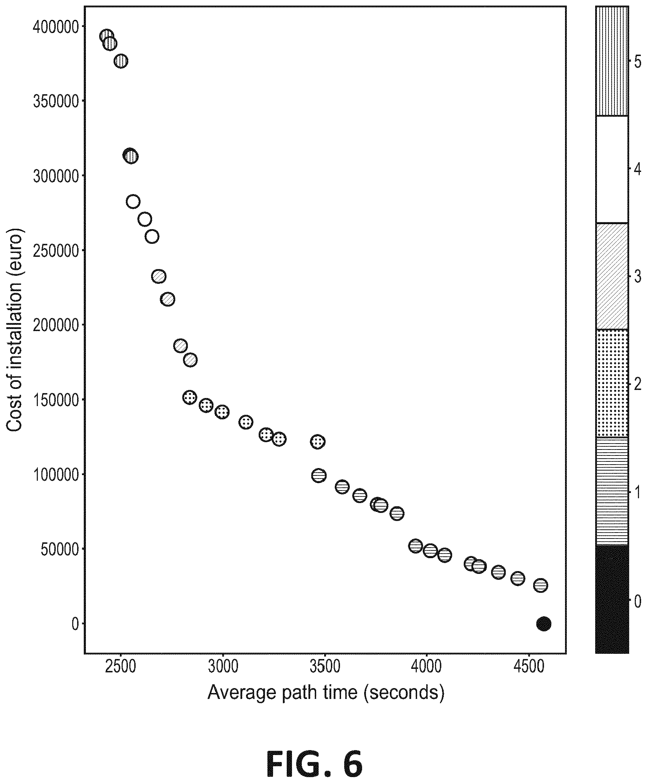

Figure 6 shows an approximation of the Pareto front between average path time and cost of the urban infrastructure to be deployed for accessibility improvement (color denotes the value of K) for the scenario of figures 4 and 5. In this plot different colors are used to highlight, in the front, those installations comprising the same number of 'K $\leq$ K$_{max}$' effectively deployed infrastructure. As such, the rightmost point corresponds to the case when no assets are installed, reflecting that without any intervention the average path time from each origin node in 'V$_o$' to every destination in 'V$_d$' is slightly above 4500 seconds (approximately 1 hour and 15 minutes), at zero cost (as expected). However, it can be observed that the framework progressively increases the number of urban infrastructure installations from K = 1 to K = 5, with a correspondingly increasing expenditure. It is interesting to notice that the front is composed of linear segments comprising points sharing the same value of K, in which the solutions only differ in terms of the value of '(v, vo)', i.e., the length of the installation. This conforms to intuition, as the relationship between cost and length is set to be linear as per Expression (9), and so is the ratio between length and path time through the speed imposed by the Tobler's hiking function, in both its seminal definition and the modification done in this work. As a matter of fact, vertical gaps (cost differences) between segments coincide with the value of 'C$_{fix}$(t$_k$)' (fixed cost term) of the extra urban element added in the new segment. It is interesting to see that the framework discovers deployments of infrastructure for expenditures up to 400k€, reducing the average path timedown to approximately 35 minutes.

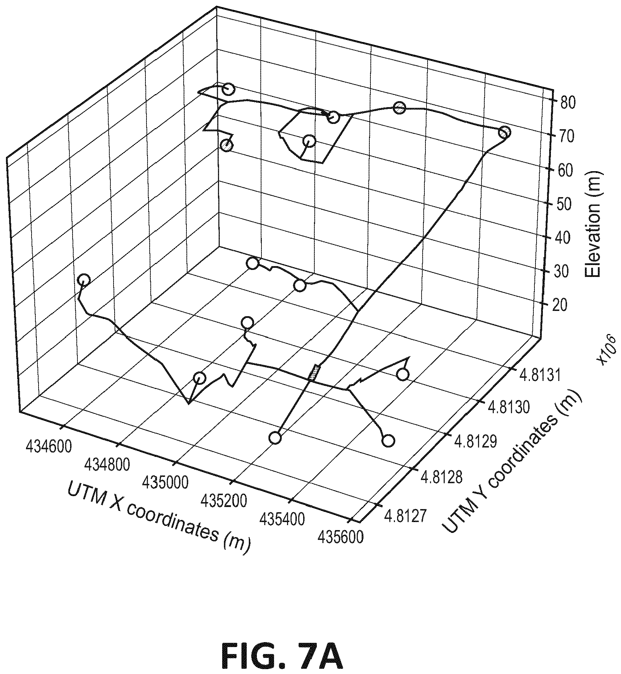

Figures 7A-E show three-dimensional graphs representing the shortest paths from each origin node to each destination node (black bold lines), together with the edges in which assets are deployed (empty boxes). Each caption denotes the objective values and the number of installed urban elements.

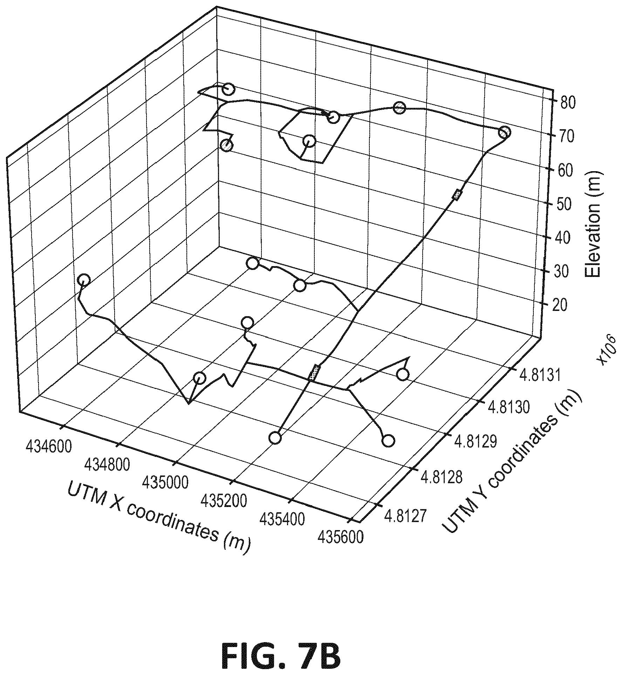

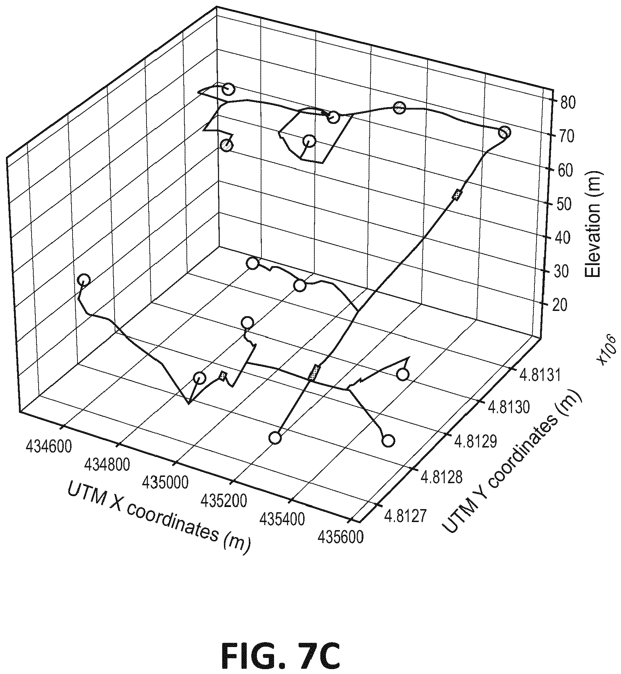

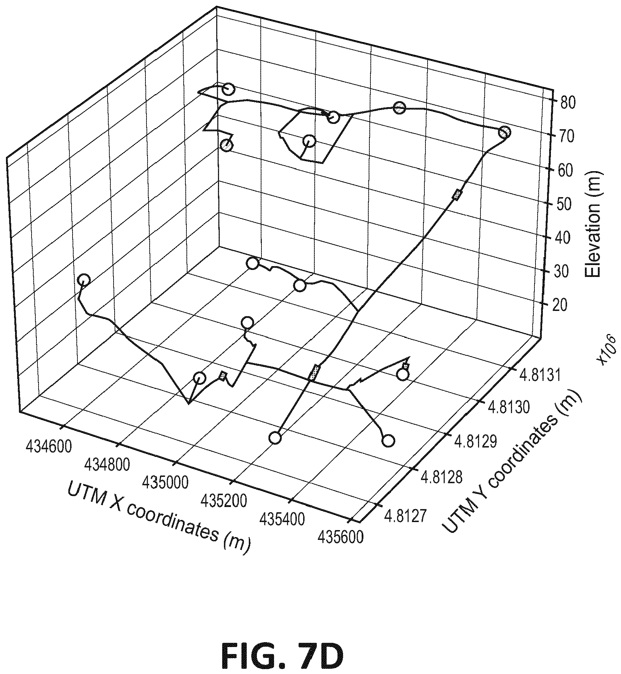

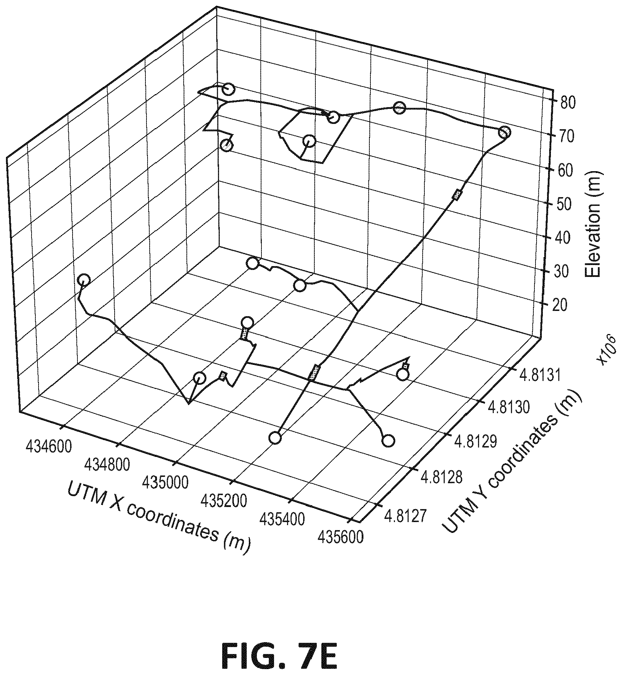

These three-dimensional graphs exemplify the actual interventions represented by different points of the estimated Pareto front, indicating with empty boxes which edges of the three-dimensional graph of Figure 4 are selected for the installation of urban infrastructures. It has been also highlighted in these three-dimensional graphs the minimum-time path connecting origin (empty circles) to destination (lined circles) nodes. In particular, Figure 7A shows a three-dimensional graph representing the shortest paths from each origin node to each destination node with one single urban infrastructure to be deployed in one of its edges (average path time= 3852 seconds, costs of installing the infrastructure 73.6k€). Figure 7B shows the same three-dimensional graph than figure 7A with two urban infrastructures to be deployed in two different edges (average path time= 3465 seconds, costs of installing the infrastructures 121.8k€). Figure 7C shows the same three-dimensional graph than figure 7B with three urban infrastructures to be deployed in three different edges (average path time= 32792 seconds, costs of installing the infrastructures 186.4k€). Figure 7D shows the same three-dimensional graph than figure 7C with four urban infrastructures to be deployed in four different edges (average path time= 2618 seconds, costs of installing the infrastructures 270.6k€). Figure 7E shows the same three-dimensional graph than figure 7D with five urban infrastructures to be deployed in four different edges (average path time= 2429 seconds, costs of installing the infrastructures 393.2k€).

As can be seen from these graphs representing the minimum-time paths, there is a high spatial correlation between them, in the sense that shortest paths with less number of nodes are contained within those comprising a higher number of nodes. Consequently, the proposed solution tends to install urban infrastructures in edges belonging to such paths rather than exploring possibilities in isolated edges that only contribute to the accessibility improvement of a unique path. This is a consequence of the spatial correlation between shortest paths: an intervention in an edge of these paths yields an improvement in the shortest paths between several origin-destination node pairs, hence pushing down the average path time objective further than an isolated intervention that could affect just one single origin-destination pair. Although the scenario discussed heretofore favors the existence of correlated minimum paths, this interpretation of the results must be done with caution and warned about the potential change in the shortest path caused by a newly added urban infrastructure. In other urban spaces with more sparsely located points of interest, such minimum paths could diverge, paving the way for local changes of the optimal path from every origin that could take their place in the estimated Pareto front.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. A computer-implemented method (100) for determining installation of urban infrastructures in urban environments, comprising:

generating (101) a geo-referenced multi-edge graph model representing a portion of an urban area, the geo-referenced multi-edge graph model comprising vertices representing street junctions within the urban area and edges connecting every pair of vertices representing corresponding walkable streets within the urban area; assigning (102) a weight to each edge, the weight being associated to at least one parameter of the edge and the at least one parameter being related to an accessibility degree of the edge, to environmental conditions in the edge, to a pre-existence of urban infrastructures in the edge and any combination thereof; selecting (103) at least one departing vertex and at least one arrival vertex within the geo-referenced multi-edge graph model; determining (104), by a multi-objective optimization model, a type of urban infrastructure, structural/functional features of the urban infrastructure and a location of the urban infrastructure in a walkable path defined between the at least one departing vertex and the at least one arrival vertex, wherein the type, the structural/functional features and the location of the particular urban infrastructure optimizes at least two accessibility and/or environmental parameter of the walkable path for a user.

2. The method according to claim 1, wherein generating the geo-referenced multi-edge graph model comprises defining the geo-referenced multi-edge graph model as G = {V, E, [$f_1$ ,..., $f_M$]}, wherein:

   'V' represents a set of the |V|=V vertices of the geo-referenced multi-edge graph model corresponding to the street junctions within the portion of urban area; 'E' is a set of the edges connecting every pair of vertices 'V', and '$f_m$': V × V→R+ is a function assigning the weight to each edge, wherein each of such functions $[fm(\cdot)]^M_{m=1}$ accounts for one particular accessibility parameter.

3. The method according to claim 1 or 2, wherein the at least one accessibility parameter is selected from a group comprising: time taken for a user to walk along an edge, average daily thermal comfort of the edge, slope of the edge, presence of stairs in the edge, width of pavement in the edge, distance from the edge to a public transport stop, point of interest or public facility and presence of urban infrastructures in the edge.

4. The method according to any one of the preceding claims, wherein the at least one environmental parameter is selected from a group comprising: an average thermal comfort of the walkable path, an average noise level in the walkable path, an average pollution level in the walkable path, an average wind speed and direction in the walkable path, an average relative humidity in the walkable path, and any combination thereof.

5. The method according to any one of the preceding claims, comprising obtaining accessibility parameters of the walkable streets from Open data portals.

6. The method according to any one of the preceding claims, comprising associating geographical coordinates to the vertices, said geographical coordinates being obtained from topographical Geographic Information System (GIS) databases.

7. The method according to any one of the preceding claims, wherein the type of accessibility infrastructure is selected from a group comprising ramps, urban escalators, lifts, sound barriers, wind barriers, sun barriers, and any combination thereof.

8. The method according to claim 7, wherein,

   the structural/functional features of the ramp are selected from a group comprising: slope of the ramp, relative length of the ramp with respect to the total length of the edge and any combination thereof;
   the structural/functional features of the urban escalator are selected from a group comprising: slope of the urban escalator, relative length of the urban escalator with respect to the total length of the edge, nominal speed at which the urban escalator is to operate, and any combination thereof;
   the structural/functional features of the lifts are selected from a group comprising: height of the lift, nominal speed at which the lift is to operate, and any combination thereof;
   the structural/functional features of the sound, sun or wind barriers are selected from a group comprising a height of the barriers, a relative length of the barriers with respect to a total length of the edge, and any combination thereof

9. The method according to any one of the preceding claims, comprising providing, by the multi-objective optimization model, a type-dependent vector with the structural/functional features of the accessibility infrastructure.

10. The method according to any one of the preceding claims, wherein the step of determining the type of accessibility infrastructure, the structural/functional features of the accessibility infrastructure and the location of the accessibility infrastructure in the walkable path comprises:

determining a plurality of walkable paths between each pair of departing vertices and arrival vertices of a plurality of departing vertices and a plurality of arrival vertices,

assigning to each walkable path of the plurality of walkable paths a different combination of types of accessibility infrastructures with different structural/functional features and located in different points of the corresponding walkable paths;

calculating the time path for a user for each walkable path;

selecting the walkable path that minimizes the time path for the user; and

providing as an output the type of accessibility infrastructure, the structural/functional features of the accessibility infrastructure and the location of the accessibility infrastructure in the selected walkable path.

11. The method according to any one of the preceding claims, wherein the user is a user with reduced mobility.

12. The method according to any one of the preceding claims, wherein the multi-objective optimization model is a multi-objective evolutionary optimization model.

13. The method according to any one of the preceding claims, wherein the multi-objective optimization model also determines the type of urban infrastructure, structural/functional features of the urban infrastructure and a location of the urban infrastructure in the walkable path that minimize the costs.

14. A computer program product comprising computer program instructions/code that when executed by a computer, cause the computer to carry out the method according to any one of claims 1-13.

15. A data processing system comprising means for carrying out the method according to any one of claims 1-13.

100

101

GENERATING A GEO-REFERENCED MULTI-EDGE GRAPH MODEL REPRESENTING A PORTION OF AN URBAN AREA

102

ASSIGNING A WEIGHT TO EACH EDGE, THE WEIGHT BEING ASSOCIATED TO AT LEAST ONE PARAMETER OF THE EDGE

103

SELECTING AT LEAST ONE DEPARTING VERTEX AND AT LEAST ONE ARRIVAL VERTEX WITHIN THE GEO-REFERENCED MULTI-EDGE GRAPH MODEL

104

DETERMINING, BY A MULTI-OBJECTIVE OPTIMIZATION MODEL, A TYPE OF URBAN INFRASTRUCTURE, STRUCTURAL/FUNCTIONAL FEATURES OF THE URBAN INFRASTRUCTURE AND A LOCATION OF THE URBAN INFRASTRUCTURE IN THE WALKABLE PATH BETWEEN THE DEPARTING AND THE ARRIVAL VERTEX THAT MINIMIZE OR MAXIMIZE AT LEAST ONE ACCESSIBILITY AND/OR ENVIRONMENTAL PARAMETER OF THE WALKABLE PATH FOR A USER.

# FIG. 1

Urban area under study

Municipal databases

GIS databases

Mapping tools

Modeling

$\mathcal{G}$

$V\ [x(v),\ y(v),\ h(v)]$

E

$f_1(),...,f_M()$

(slope, bus stops, shadowing...)

Multi-objective optimization

Interventional decisions

Accessibility-related indicators

Cost

Time

...

**FIG. 2**

EP 4 273 769 A1

**FIG. 3**

**FIG. 4**

**FIG. 5**

# FIG. 6

**FIG. 7A**

**FIG. 7B**

**FIG. 7C**

**FIG. 7D**

**FIG. 7E**

Europäisches
Patentamt

European
Patent Office

Office européen
des brevets

# EUROPEAN SEARCH REPORT

**Application Number**

EP 22 38 2426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | D'ORSO GABRIELE ET AL: "A GIS-based method for evaluating the walkability of a pedestrian environment and prioritised investments", JOURNAL OF TRANSPORT GEOGRAPHY, PERGAMON, AMSTERDAM, NL, vol. 82, 9 November 2019 (2019-11-09), XP085990137, ISSN: 0966-6923, DOI: 10.1016/J.JTRANGEO.2019.102555 [retrieved on 2019-11-09] * pages 1-6 * ----- | 1-15 | INV. G06Q10/04 G06Q50/08 G06Q50/26 G09B25/00 G09B29/00 |
| X | ORTEGA EMILIO ET AL: "Evaluating the impact of urban design scenarios on walking accessibility: the case of the Madrid 'Centro' district", SUSTAINABLE CITIES AND SOCIETY, ELSEVIER, AMSTERDAM, NL, vol. 74, 10 July 2021 (2021-07-10), XP086777158, ISSN: 2210-6707, DOI: 10.1016/J.SCS.2021.103156 [retrieved on 2021-07-10] * pages 3-8 * ----- | 1-15 | |
| X | BARCZYSZYN GUILHERME L GUILHERME BARCZYSZYN@GMAIL COM ET AL: "A Collaborative System for Suitable Wheelchair Route Planning", ACM TRANSACTIONS ON ACCESSIBLE COMPUTING (TACCESS), ACM, 2 PENN PLAZA, SUITE 701 NEW YORK NY 10121-0701 USA, vol. 11, no. 3, 28 August 2018 (2018-08-28), pages 1-26, XP058672481, ISSN: 1936-7228, DOI: 10.1145/3237186 * page 18.10 – page 18.21 * ----- | 1-15 | |

TECHNICAL FIELDS
SEARCHED      (IPC)

G09B
G06Q

-/--

The present search report has been drawn up for all claims

| Place of search | Date of completion of the search | Examiner |
|---|---|---|
| Munich | 17 October 2022 | Giemsa, Falk |

EPO FORM 1503 03.82 (P04C01)

Europäisches
Patentamt
European
Patent Office
Office européen
des brevets

# EUROPEAN SEARCH REPORT

Application Number

EP 22 38 2426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLECIC IVAN ET AL: "Computer-Aided Drafting of Urban Designs for Walkability", 19 July 2017 (2017-07-19), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 695 - 709, XP047420893, ISBN: 978-3-540-74549-5 [retrieved on 2017-07-19] * pages 696-707 * ----- | 1-15 | |

TECHNICAL FIELDS
SEARCHED       (IPC)

The present search report has been drawn up for all claims

| Place of search | Date of completion of the search | Examiner |
|---|---|---|
| Munich | 17 October 2022 | Giemsa, Falk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)